# EUROPÄISCHE PATENTSCHRIFT

(11) **EP 1 227 298 B1**
(45) Veröffentlichungstag und Bekanntmachung des Hinweises auf die Patenterteilung: **16.06.2010**
(21) Anmeldenummer: 02000564.1
(22) Anmeldetag: 10.01.2002
(51) Int. Cl.: G01B 11/26, G01C 1/00, G01C 19/02, H04B 10/22, G01D 5/26, G08C 23/04

(54) **Winkelerfassungsvorrichtung mit Datenübertragungsstrecke an einer n * 360 Grad Lagerung**
Angular detection device with a data transmission line at a bearing of n * 360 degrees
Dispositif de mesure angulaire avec une voie de transmission de données à un logement de n * 360 degrés

(30) Priorität: 18.01.2001 DE 10102278
(43) Veröffentlichungstag der Anmeldung: 31.07.2002
(73) Patentinhaber: Raytheon Marine GmbH, 24106 Kiel (DE)
(72) Erfinder: Skerka, Wolfgang, 24768 Rendsburg (DE); Bey, Ulf, 24625 Grossharrie (DE); Bast, Werner, 24106 Kiel (DE)
(74) Vertreter: Liesegang, Eva

(56) Entgegenhaltungen:
- EP-A- 0 066 636
- DE-A- 4 426 293
- DE-A- 19 728 314
- US-A- 4 361 760
- US-A- 6 128 426

## Beschreibung

Die Erfindung betrifft eine Winkelerfassungsvorrichtung mit Datenübertragungsstrecke an einer n · 360° Lagerung und einen Kreiselkompaß mit einer solchen Winkelerfassungsvorrichtung und Datenübertragungsstrecke.

Die sich für diese Lagerungen ergebenden Probleme und Anforderungen werden im folgenden zunächst für den konkreten Anwendungsfall eines Kreiselkompasses beschrieben.

Kreiselkompasse, wie sie beispielsweise aus der DE-A1 44 26 293 bekannt sind, weisen ein in einer Hülle gelagertes, in seiner Ausrichtung relativ zur Erdoberfläche stets seine Position beibehaltendes Kreiselsystem auf, das unter schneller Drehung gehalten wird. Die Hülle ist dabei an einem Traggestell befestigt, das über einen Nachlaufmotor entsprechend der momentanen Kreiselsystemausrichtung, d.h. dem Momentanwinkel zur Hülle nachführbar ist, um den entstandenen Winkel zwischen Kreiselsystem und Hülle wieder zu Null zu reduzieren.

Der Betrag dieser Nachführung der Hülle, der bevorzugt durch elektro-optische Abtastung einer Codemarkierung auf einer Abtastscheibe in ihrem Absolutwinkel erfaßt wird, gibt dabei die relative Kursänderung eines Fahrzeugs an, während sich der Rumpf des Fahrzeugs, z.B. eines Schiffs o.dgl. mit dem mit ihm verbundenen Traggestell gegenüber dem in seiner Ausrichtung konstant verbleibenden Kreiselsystem verdreht. Die Ergebnisse der elektro-optischen Abtastung werden bevorzugt einer weiteren elektronischen Weiterverarbeitung und schließlich einer Anzeige zugeführt. In der genannten Schrift ist die Erfassung dieses Winkels näher ausgeführt.

Der Schwimmer mit Kreiselsystem wird bei einem solchen Kreiselkompass in einer gegenüber der Umgebungstemperatur aufgewärmten, dadurch viskoseren Elektrolytflüssigkeit gehalten, die zudem durch Pumpen in Bewegung versetzt ist. Der Betriebszustand dieser Pumpen, die Temperatur der Flüssigkeit, sowie die Steuersignale für die Kreiselsystemstellung und die Heizung werden dabei bisher über Schleifringverbindungen elektrisch übermittelt.

Hierbei ergibt sich das Problem, daß insbesondere bei Verwendung digitaler Signale, wie sie heutzutage üblich sind, aber auch bei analogen Signalen, einzelne Bits durch die Schleifringverbindung "verloren gehen" können, was zu völlig falschen übermittelten Daten führt. Bisher werden daher die übermittelten Daten, bevor sie an den Nachführmotor gegeben werden, durch aufwendige Softwareprogramme auf ihre Plausibilität hin überprüft. Trotz dieses erheblichen Aufwandes kann es zu Problemen mit falschen Statusdaten kommen.

Die DE 19728314 A1 beschreibt eine Signalübertragungseinrichtung und ein Verfahren zur Übertragung von Daten auf einem oder mehreren Datenkanälen zwischen einem rotierenden System und einem feststehenden System. Auf einem ringförmigen rotierenden Bereich ausserhalb der Drehachse sind Segment-artig gleichmäßig verteilt mehrere Sender angeordnet, auf einem gegenüberliegenden gleichartigen ringförmigen und ortsfesten Bereich sind gegenüberliegende Empfänger angeordnet. Ein Drehwinkelsensor stellt die Verdrehung gegenüber dem feststehenden ringförmigen Bereich fest, dem entsprechend ordnet eine spezielle Sender- Umschalteinrichtung die Datenkanäle denjenigen Sendern zu, welche in einem bestimmten Drehwinkel-Bereich bestimmten Empfängern gegenüberliegen. Es ist nur eine einseitige Datenübertragung in eine einzige Richtung vorgesehen.

Der Erfindung liegt die Aufgabe zu Grunde, eine Winkelerfassungsvorrichtung bzw. einen Kreiselkompass gemäß dem Oberbegriff des Anspruches 1 bzw. 8 mit einer verkürzten Ansprechzeit sowie mit einer Drehwinkel-unabhängigen bidirektionalen Datenübertragung zu schaffen.

Die Aufgabe wird durch die Merkmale der Ansprüche 1 und 8 gelöst. Abhängige Unteransprüche stellen vorteilhafte Ausgestaltungen der Erfindung dar.

Hierbei werden auf der Abtastscheibe für die Winkelinformation zusätzlich elektrooptische Informationsübertragungsmittel vorgesehen, die mit auf einer gegenüberliegenden Fläche vorgesehenen entsprechenden Informationsübertragsmitteln eine bidirektionale Informationsübertragungsstrecke bilden, die auch bei Verdrehung der Abtastscheibe gegenüber der gegenüberliegenden Fläche, die an dem Traggestell angesetzt ist, die fehlerlose elektrooptische Übertragung von Informationen ermöglicht.

Ein Versorgungsspannungsstrom kann dann wie bisher z.B. über eine Schleifringverbindung eingeleitet werden, wobei die Eigenschaften der Schleifringverbindung unproblematisch sind.

Es werden je eine Sender- und eine Empfangsdiode (oder ein Transistor) vorgesehen, wobei eine Diode eng benachbart zum Drehmittelpunkt bzw. zur abstrakten Drehachse und die andere Diode direkt in der abstrakten Drehachse angeordnet ist, bevorzugt je zwei gleichartige Bauteile direkt auf der Drehachse; so daß unabhängig vom Drehwinkel der Abtastscheibe die nun stets im gleichen Winkel zur Drehachse verlaufende optische Übertragungsstrecke auch stets die gleichen Ausleuchtwinkel der Dioden nutzt. Auf diese Weise wird sichergestellt, daß keine Intensitätsschwankungen durch sich ändernde Ausleuchtwinkel beim Verdrehen der Abtastscheibe auftreten können.

Außer für Kreiselkompasse ist die Winkelerfassungsvorrichtung mit Datenübertragungsstrecke an einer n · 360° Lagerung für beliebige Lagerungen von zwei Bauteilen aneinander und ggf. auch solche an denen mehrere (Teil-) Abtastflächen mit entsprechenden elektrooptischen Abtastmitteln erfaßt werden, geeignet.

Die auf dem festen Bauteil - im Beispiel des Kompasses auf der gegenüberliegenden mit dem Traggestell verbundenen Seite - vorgesehene Elektronik zum Umwandeln der Daten kann ebenso wie die auf dem beweglichen Bauteil vorgesehene Elektronik dann in geeigneter Weise z.B. zur Weiterleitung in ein CAN-Bus-System (controller area network) ausgelegt sein.

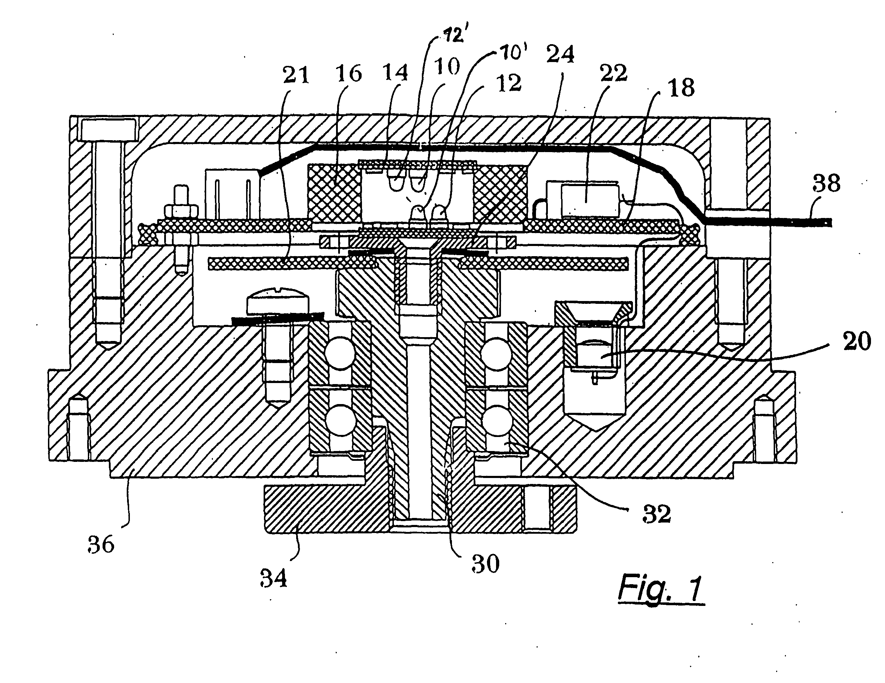

Weitere Merkmale und Vorteile der Erfindung ergeben sich aus nachfolgender Beschreibung eines bevorzugten Ausführungsbeispiels der Erfindung. Dabei zeigt die
- Fig. 1: einen Schnitt durch die Lagerung im Bereich der Abtastscheibe.

Die in der Mitte hohl dargestellte Drehachse 30 der Hülle eines Kreiselkompaß trägt in der Fig. 1 die erfindungsgemäße Winkelerfassungsvorrichtung mit Datenübertragungsstrecke und ist n - 360° verdrehbar. In der (nicht dargestellten) unter der Lagerung am mit Bezugszeichen 34 bezeichneten Bauteil hängenden Hülle ist dann das eigentliche Kreiselsystem vorhanden, dessen Ausrichtung folgend die Hülle über einen Antrieb an der n · 360° Lagerung nach gedreht wird, wobei das Gehäuse 36, an dem der Antrieb befestigt ist, ortsfest, d.h. mit einem Fahrzeugrumpf gekoppelt ist.

Die Nachführung der Hülle wird mit einem Kreiselabtastsystem bewirkt, das die Position des Schwimmers mit dem schnell rotierenden Kreisel über Kontakte an der Hülle über eine Brückenschaltung ausliest, und diese Information in einem Nachführkreis in Nachführsignale für den Antrieb entsprechend eines sich beim Drehen des Fahrzeugs einstellenden Relativwinkels zwischen Kreisel und Hülle umsetzt.

Da die runde sich rechtwinklig von der Drehachse weg erstreckende Abtastscheibe 21 fest mit der Hülle verbunden ist, wird sich nun zwischen ihr und der ihr gegenüberliegende Fläche, die fest mit dem Fahrzeugrumpf verbunden ist, ein Winkel einstellen, dessen Absolutwert aus der empfangenen Information einer Reihe von auf einer Platine angeordneten elektrooptischen Erfassungsmitteln 22 ausgelesen werden kann, die von einer lichtemittierenden Diode 20 durch die mit einem Code versehene runde, außer durch den aufgebrachten Code im wesentlichen transparente Abtastscheibe 21 hindurch beleuchtet werden.

Da also auf einer der Abtastfläche parallelen Fläche bereits eine Platine vorhanden ist, kann ohne nennenswerten apparativen Herstellungsaufwand durch Vorsehung einer optischen bidirektionalen Verbindung mit Hilfe eines Opto Arrays (ggf. mit Analog ASIC) und z.B. zwei GaAlAs-Dioden mit Fototransitoren als Sensoren eine Datenverbindung mit z.B. 400 kBaud hergestellt werden.

Diese optische Übertragungsstrecke ist in einem hohen Arbeitstemperaturbereich (-20°C bis 85°C) betreibbar und gegen Vibration unempfindlich (1-58 Hz : 1 mm tolerabel und 58-1000 Hz (nach DIN IEC 68): 1000 m/s²).

Allgemein läßt sich diese Winkelerfassungsvorrichtung mit Datenübertragungsstrecke an allen denkbaren n · 360° Lagerungen von zwei Bauteilen aneinander einsetzen, z.B. an Roboterarmen oder Antennen.

Eine monodirektionale Informationsübertragung zwischen Abtastscheibe 21 und gegenüberliegender Fläche ist dabei auch denkbar und wird durch Patentanpruch 1 mitumfaßt.

Bevorzugt wird aber eine bidirektionale Verbindung, bei der zwei gleichartige Bauelemente - zwei Emitter oder zwei Empfänger jeweils in der Drehachse angeordnet sind, während das komplementäre Bauteil eng benachbart auf der Abtastscheibe oder der gegenüberliegenden Fläche angeordnet ist. Dann ergibt sich eine stets im gleichen Abstrahlwinkel erfolgende, im übrigens stets gleichlange Ubertragungsstrecke, die insbesondere den Vorteil hat, daß keine sich ändernden Ausleuchtwinkel auftreten.

Damit liegen, wie in Fig. 1 mit zwei unterbrochenen Li-nien angedeutet, zwei miteinander eine Übertragungsstrecke bildende Bauelemente bei Verdrehung zueinander stets in einem mit gleicher Emissionsstärke versehenen Bereich des Abstrahlkegels eines LED - aber auch in einem stets gleich sensitiven Empfangswinkel des komplementären Transistors oder einer entsprechenden Diode.

Da die Reihe der den Code auf der Abtastscheibe 21 auslesenden Sensorelemente 22 eng benachbart dieser angeordnete sind, und die auf der Abtastscheibe 21 angeordneten Dioden 12 eine gewissen Höhe haben, ist - wie in Fig. 1 Gut zu erkennen - eine die gegebüberliegenden Informationsübertragungsmittel 10 haltende Platine 14 in einem kleinen störlicht- und EMV-dichten Gehäuse 16 auf der gegenüberliegenden Fläche, einer Platine 18, erhöht angeordnet.

Weiter sind die Dioden 12 nicht direkt auf der Abtastscheibe (die aus Glas oder Kunststoff gefertigt ist), sondern auf einer weiteren, an der Drehachse 30 zentrisch befestigten Platine 24 vorgesehen, die über die hohle Achse mit Kabeln an die übrigen in der Hülle befindlichen Bauteile angeschlossen ist.

Mit Bezugszeichen 38 ist schließlich ein Flachkabel bezeichnet, daß die Daten von der festen Platine 18 weiter nach außen aus dem Kreiselgerät heraus an die Anzeige und weitere Navigationsgeräte weiterleitet.

## Patentansprüche

1. Winkelerfassungsvorrichtung mit Datenübertragungsstrecke an einer n x 360°-Lagerung mit einem ortsfesten Gehäuse (36), einer Drehachse (30), wenigstens einer rechtwinklig zur Drehachse (30) an einem von zwei Bauteilen angeordneten Abtastscheibe (21) und elektrooptischen Beleuchtungsmitteln (20) und elektrooptischen Erfassungsmitteln (22) zur Abtastung des Momentanwinkels der Abtastscheibe (21),
**dadurch gekennzeichnet,**
a) **dass** die elektrooptischen Beleuchtungsmittel (20) und elektrooptischen Erfassungsmitel (22) an dem ortsfesten Gehäuse (36) an jeweils den durch die Lagerung aneinander gehaltenen Bauteilen angeordnet sind und
b) **dass** zwischen der Drehachse (30) und dem ortsfesten Gehäuse (36) eine bidirektionale Datenübertragungsstrecke vorgesehen ist, wobei an dem die Abtastscheibe (21) tragenden Ende der Drehachse (30) und an einer ihr gegenüberliegenden ortsfesten Fläche je eine erste und zweite Platine (24, 14) angeordnet ist, wobei jede Platine (24, 14) zwei optoelektronische Bauelemente (10,12; 10',12') trägt, von denen eines (10; 10') in der Verlängerung der Drehachse (30) der n x 360°-Lagerung angeordnet ist, während das jeweils komplementäre Bauelement (12; 12') auf der jeweiligen Platine eng benachbart zur Drehachse angeordnet ist,
derart, dass bidirektionale Datenübertragungsstrecken zwischen den gegenüberliegenden optoelektronischen Bauelementen (10,12; 10',12') unabhängig vom Drehwinkel stets im gleichen Winkel zur Drehachse der n x 360°-Lagerung verlaufen, wobei zwei miteinander eine Datenübertragungsstrecke bildende Bauelemente (10,12; 10',12') bei Verdrehung in einem im Betrag stets gleich bleibendem Abstrahlwinkel von dem jeweils emittierenden Sende-Bauelement liegen.

2. Winkelerfassungsvorrichtung nach Anspruch 1, **dadurch gekennzeichnet, dass** die Drehachse (30) zur Aufnahme von Kabeln für den Anschluss an die übrigen in einer Hülle befindlichen Bauteile hohl ausgebildet ist.

3. Winkelerfassungsvorrichtung nach Anspruch 1 oder 2, **dadurch gekennzeichnet, dass** die Abtastscheibe (21) rund ist.

4. Winkelerfassungsvorrichtung nach einem der Ansprüche 1 bis 3, **dadurch gekennzeichnet, dass** auf jeder der sich gegenüberliegenden Platinen (14, 24) je ein Halbleiterlichtemitter und ein Lichtdetektor als optoelektronische Bauelemente angeordnet sind.

5. Winkelerfassungsvorrichtung nach einem der Ansprüche 1 bis 4, **dadurch gekennzeichnet, dass** zwei gleichartige optoelektronische Bauelemente gegenüberliegend in der Verlängerung der Drehachse angeordnet sind.

6. Winkelerfassungsvorrichtung nach einem der Ansprüche 1 bis 5, **dadurch gekennzeichnet, dass** zwei komplementäre Bauelemente (12; 10') auf einer mit der Abtastscheibe (21) verbundenen Platine (24) angeordnet sind, die auf der Drehachse (30) zentrisch befestigt ist, und dass die gegenüberliegende ortsfeste Platine (14) zur Halterung der weiteren beiden hierzu komplementären Bauelemente (10; 12') zur Bildung einer bidirektionalen Winkelerfassungsvorrichtung in einem kleinen Störlicht- und EMV-dichten Gehäuse (16) angeordnet ist.

7. Winkelerfassungsvorrichtung nach einem der Ansprüche 1 bis 6, **dadurch gekennzeichnet, dass** die drehbare Abtastscheibe (21), die fest mit der Hülle verbunden ist, bis auf den aufgebrachten Code im wesentlichen transparent ist, von Beleuchtungsmitteln (20) in Form einer lichtemittierten Diode durchstrahlt wird, und dass auf der anderen Seite der Abtastscheibe (21) ortsfeste elektrooptische Erfassungsmittel (22) vorgesehen sind.

8. Kreiselkompass mit einer Winkelerfassungsvorrichtung nach einem der vorhergehenden Ansprüche und mit einem Kreiselgerät, bestehend aus:
- einem Kreiselsystem,
- einer das Kreiselsystem umgebenden Hülle, die über einen Antrieb an der n x 360°-Lagerung frei verdrehbar ist, wobei das Kreiselgerät mit einem Fahrzeugrumpf gekoppelt ist,
- einem Kreiselabtastsystem, bestehend aus einer abtastenden Einrichtung mit Kontakten und einem Nachführkreis zur Erzeugung von Nachführsignalen für einen Antrieb entsprechend einem sich beim Drehen des Fahrzeuges einstellenden Relativwinkel zwischen Kreiselsystem und Hülle,
- wobei als abtastende Einrichtung eine Abtastscheibe (21) an der Hülle angesetzt ist und wobei eine der Abtastscheibe (21) gegenüberliegende Fläche (18) über ein ortsfestes Gehäuse (36) mit dem Fahrzeugrumpf verbunden ist.

## Claims

1. An angle detection device having a data transmission path on an n x 360° degree bearing including a fixed housing (36), an axis of rotation (30), at least one scanning disk (21) arranged at one of two components at right angles to the axis of rotation, and electro-optical illumination means (20) and electro-optical detection means (22) for scanning the current angle of the scanning disk (21),
**characterized in that**
a) the electro-optical illumination means (20) and the electro-optical detection means (22) are arranged at the fixed housing (36) at the respective components which are supported on each other by said bearing, and
b) between the axis of rotation (30) and the fixed housing (36) a bidirectional data transmission path is provided wherein first and second boards (24, 14) are arranged at the end of the axis of rotation (30) carrying the scanning disk (22) and at an opposite fixed surface, respectively, wherein each board (24, 14) carries two opto-electrical components (10, 12; 10', 12'), one (10; 10') of which is arranged at the extension of the axis of rotation (30) of the n x 360° bearing, while the respective complementary component (12; 12') is arranged on the board adjacent to the axis of rotation,
so that bidirectional data transmission paths between the opposite electro-optical components always run at the same angle to the axis of rotation of the n x 360° bearing, irrespective of the rotational angle wherein two components, when being rotated, are arranged at an emission angle of always the same amount relative to the respective emitting transmitter component.

2. The angle detection device of claim 1, **characterized in that** the axis of rotation (30) is formed to be hollow so as to receive cables for connection to other components provided in an envelope.

3. Angle detection device according to claim 1 or claim 2, **characterized in that** the scanning disk (21) is round.

4. Angle detection device according to one of claims 1 to 3, **characterized in that,** on each of the opposite boards (14, 24), a respective semiconductor light emitter and a light detector are provided as opto-electronic components.

5. Angle detection device according to one of claims 1 to 4, **characterized in that** two opto-electronic components of the same type are arranged opposite to each other along the extension of the axis of rotation.

6. Angle detection device according to one of claims 1 to 5, **characterized in that** two complementary components (12; 10') are arranged on a board (24) connected to the scanning disk (21), the board being centrally mounted to the axis of rotation (30) and that the opposite fixed board (14) is arranged for supporting the further two complementary components (10; 12') for forming a bidirectional angle detection device in a small housing (16) which is interference light-proof and EMC-proof.

7. Angle detection device according to one of claims 1 to 6, **characterized in that** the rotatable scan disk (21), fixedly connected to the envelope, is substantially transparent except for the code applied thereon and that, on the other side of the scanning disk (21), fixed electro-optical detection means (22) are provided.

8. Gyroscopic compass including an angle detection means according to one of the preceding claims, and a gyroscope, comprising:
- a gyro system,
- an envelope encompassing the gyroscopic system, the envelope being freely rotatable at the n x 360° bearing via a drive, wherein the gyroscope is coupled to a vehicle body,
- a gyro scanning system comprising scanning means including contacts and a tracking circuit for generating tracking signals for a drive corresponding to a relative angle between the gyroscopic system and the envelope during rotation of the vehicle,
- wherein a scanning disk (21) is provided at the envelope as said scanning means and wherein a surface (18) opposite to the scanning disk (21) is connected to the vehicle body via a fixed housing (36).

## Revendications

1. Dispositif de détermination d'angle à trajet de transmission de données sur un palier à rotation n x 360°, avec un boîtier fixe (36), un axe rotatif (30), au moins un disque de balayage (21) disposé perpendiculairement à l'axe rotatif (30) sur le premier de deux éléments, et avec des moyens d'éclairage électro-optiques (20) et des moyens de saisie électro-optiques (22) pour le balayage de l'angle actuel du disque de balayage (21),
**caractérisé**
a) **en ce que** les moyens d'éclairage électro-optiques (20) et les moyens de saisie électro-optiques (22) sur le boîtier fixe (36) sont disposés sur les éléments respectifs maintenus l'un contre l'autre par le palier, et
b) **en ce qu'**un trajet de transmission bidirectionnelle de données est prévu entre l'axe rotatif (30) et le boîtier fixe (36), une première et une deuxième platines (24, 14) étant disposées sur l'extrémité de l'axe rotatif (30) qui supporte le disque de balayage (21) et sur une surface fixe qui lui est opposée, chaque platine (14, 24) supportant deux composants optoélectroniques (10, 12 ; 10', 12') dont l'un (10 ; 10') est disposé dans la prolongation de l'axe rotatif (30) du palier n x 360°, alors que le composant complémentaire (12 ; 12') est disposé sur la platine correspondante, étroitement contigu à l'axe rotatif,
de telle manière que les trajets de transmission bidirectionnelle de données entre les composants optoélectroniques (10, 12 ; 10', 12') opposés s'étendent toujours suivant le même angle par rapport à l'axe rotatif du palier n x 360°, indépendamment de l'angle de rotation, deux composants (10, 12 ; 10', 12') formant ensemble un trajet de transmission de données étant situés suivant un angle de diffusion de valeur toujours constante par rapport au composant d'émission émetteur en cas de rotation.

2. Dispositif de détermination d'angle selon la revendication 1, **caractérisé en ce que** l'axe rotatif (30) est creux, pour la réception de câbles à connecter aux autres éléments disposés dans une enveloppe.

3. Dispositif de détermination d'angle selon la revendication 1 ou la revendication 2, **caractérisé en ce que** le disque de balayage (21) est circulaire.

4. Dispositif de détermination d'angle selon l'une des revendications 1 à 3, **caractérisé en ce qu'**un émetteur lumineux à semi-conducteur et un détecteur de lumière sont disposés sur chacune des platines (14, 24) opposées en tant que composants optoélectroniques.

5. Dispositif de détermination d'angle selon l'une des revendications 1 à 4, **caractérisé en ce que** deux composants optoélectroniques de même type sont disposés opposés l'un à l'autre dans la prolongation de l'axe rotatif.

6. Dispositif de détermination d'angle selon l'une des revendications 1 à 5, **caractérisé en ce que** deux composants complémentaires (12 ; 10') sont disposés sur une platine (24) raccordée au disque de balayage (21) et fixée de manière centrée sur l'axe rotatif (30), et **en ce que** la platine (14) fixe opposée est disposée dans un petit boîtier (16) opaque à la lumière parasite et protégé contre les perturbations électromagnétiques pour le maintien des deux autres composants complémentaires (10 ; 12'), afin de former un dispositif de détermination d'angle bidirectionnel.

7. Dispositif de détermination d'angle selon l'une des revendications 1 à 6, **caractérisé en ce que** le disque de balayage (21) rotatif qui est fixement raccordé à l'enveloppe est essentiellement transparent à l'exception du code appliqué, est exposé aux rayons traversants de moyens d'éclairage (20) sous la forme d'une diode émettrice de lumière, et **en ce que** des moyens fixes de saisie électro-optiques (22) sont prévus sur l'autre face du disque de balayage (21).

8. Compas gyroscopique avec un dispositif de détermination d'angle selon l'une des revendications précédentes et avec un gyroscope, composé :
- d'un système gyroscopique,
- d'une enveloppe entourant le système gyroscopique, librement rotative au moyen d'un entraînement sur le palier n x 360°, le gyroscope étant accouplé à un habillage de véhicule,
- un système de balayage gyroscopique, composé d'un dispositif de balayage avec des contacts et d'un circuit de poursuite pour la génération de signaux de poursuite pour un entraînement, en fonction d'un angle relatif entre le système gyroscopique et l'enveloppe qui est formé lorsque le véhicule tourne,
- un disque de balayage (21) étant appliqué contre l'enveloppe en tant que dispositif de balayage, et une surface (18) opposée au disque de balayage (21) étant raccordée à l'habillage de véhicule par un boîtier fixe (36).
